(19) Europäisches Patentamt
European Patent Office
Office européen des brevets

(11) **EP 4 535 443 A1**

(12) **EUROPEAN PATENT APPLICATION**
published in accordance with Art. 153(4) EPC

(43) Date of publication:
**09.04.2025 Bulletin 2025/15**

(21) Application number: **24771145.0**

(22) Date of filing: **11.03.2024**

(51) International Patent Classification (IPC):
*H01M 4/04* (2006.01)       *H01M 4/133* (2010.01)
*F26B 3/30* (2006.01)       *F26B 15/18* (2006.01)
*F26B 25/06* (2006.01)       *H01M 4/02* (2006.01)

(52) Cooperative Patent Classification (CPC):
**F26B 3/30; F26B 15/18; F26B 25/06; H01M 4/02;
H01M 4/04; H01M 4/133;** Y02E 60/10

(86) International application number:
**PCT/KR2024/003085**

(87) International publication number:
**WO 2024/191146 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.03.2023 KR 20230032299**

(71) Applicant: **LG Energy Solution, Ltd.
Seoul 07335 (KR)**

(72) Inventors:
• **YOON, Jong Su
  Daejeon 34122 (KR)**

• **LEE, Taek Soo
  Daejeon 34122 (KR)**
• **CHO, Jin Ho
  Daejeon 34122 (KR)**
• **JEON, Shin Wook
  Daejeon 34122 (KR)**
• **KIM, Young Gon
  Daejeon 34122 (KR)**

(74) Representative: **Plasseraud IP
104 Rue de Richelieu
CS92104
75080 Paris Cedex 02 (FR)**

(54) **ANODE FOR LITHIUM SECONDARY BATTERY, AND ANODE MANUFACTURING APPARATUS THEREFOR**

(57)    A negative electrode manufacturing device for lithium secondary battery that is capable of simultaneously performing crystal surface orientation and pre-drying of a carbon-based negative electrode active material at an edge end of a negative electrode slurry is provided. The negative electrode manufacturing device provides a drying part using light at an edge of a magnetic part that aligns the crystal surface of the carbon-based negative electrode active material. A negative electrode manufactured by the device has a high orientation of the crystal surface of the carbon-based negative electrode active material contained in a sliding region of the negative electrode active layer, and high uniformity of orientation between the sliding region and a flat region of the negative electrode active material.

**EP 4 535 443 A1**

**(Cont. next page)**

【FIG. 2】

**Description**

**[Technical Field]**

The present application claims the benefit of priority based on Korean Patent Application No. 10-2023-0032299, filed on March 13, 2023, all of which are incorporated herein by reference.

The present disclosure relates to a negative electrode for a lithium secondary battery and a manufacturing device for manufacturing the same.

**[Background Art]**

Recently, secondary batteries have been widely applied not only in small devices such as portable electronics, but also in medium and large devices such as battery packs or power storage device in hybrid or electric vehicles.

Such a secondary battery refers to a chargeable and dischargeable power generating device comprising a stacked structure of a positive electrode/separator/negative electrode. Generally, the positive electrode includes a lithium metal oxide as a positive electrode active material, and the negative electrode includes a carbon-based negative electrode active material such as graphite, such that when the secondary battery is charged, lithium ions emitted from the positive electrode are adsorbed into the carbon-based negative electrode active material of the negative electrode, and when the secondary battery is discharged, lithium ions contained in the carbon-based negative electrode active material are adsorbed into the lithium metal oxide of the positive electrode, and charge and discharge are repeated.

In this case, the negative electrode active materials used in the negative electrode include graphite materials such as natural graphite, etc. The graphite has a layered structure and is formed by stacking a plurality of layers in which carbon atoms form a network structure spread in a planar shape. During charging, lithium ions can invade from the edges of these graphite layers (the side where the layers overlap) and diffuse between the layers, and during discharging, lithium ions can dissociate and be released from the edges of the layers. In addition, since graphite has a lower electrical resistance in the side direction of the layer than in the stacked direction of the layer, a conduction path of diverted electrons is formed along the side direction of the layer.

In this regard, in a lithium secondary battery using graphite, a technology for magnetically orienting graphite contained in a negative electrode to improve the charging performance of the negative electrode has been conventionally proposed. Specifically, it has a configuration in which the (0,0,2) crystal surfaces of the graphite are oriented so that they are approximately horizontal with respect to the current collector in a magnetic field at the time of forming the negative electrode and are fixed therein. In this case, since the edge of the graphite layer faces the positive electrode active layer, the insertion dissociation of the lithium ions is carried out smoothly and the conduction path of the electrons is shortened, which can improve the electronic conductivity of the negative electrode, thereby improving the charging performance of the battery.

Meanwhile, the negative electrode slurry used in manufacturing an active layer of a negative electrode for a lithium secondary battery has a form in which graphite, a carbon-based negative electrode active material, is mixed with a dispersant. In this case, water is generally utilized as the dispersant. Water is a solvent having a large surface tension, and the negative electrode slurry included therein exhibits a phenomenon of reducing the surface area exposed to air after applied to the negative electrode current collector due to the large surface tension of water. Accordingly, the negative electrode slurry applied on the negative electrode current collector forms a curved surface having an edge end at a predetermined angle with the surface of the negative electrode current collector toward the interior of the slurry. The curved surface causes the potential energy of the molecules near the surface of the liquid and the molecules inside the liquid to differ due to the large surface tension of the water, and such energy deviation may increase the kinetic energy of the components contained in the negative electrode slurry. The increase in kinetic energy of each of these components acts as a factor that hinders the orientation of graphite using a magnetic field.

Specifically, the orientation of the crystal surface of the graphite by the magnetic force is realized by rotating the crystal surface of the graphite by applying a magnetic force greater than the kinetic energy of the graphite. However, at the edge end of the negative electrode slurry, the kinetic energy of the graphite contained at the edge end is increased because the molecules near the liquid surface and the molecules inside the liquid have different energy. Accordingly, when a magnetic field is applied to the front surface of the negative electrode slurry, the center of the negative electrode slurry having a flat exposed surface is implemented with a high orientation of the graphite, but the edge end of the negative electrode slurry having a curved exposed surface is implemented with a low orientation of the graphite.

Therefore, there is a need for a technology capable of improving the low orientation of the graphite due to the curved surface structure induced at the edge end of the negative electrode slurry, so as to manufacture a negative electrode active layer in which the crystal surface of the graphite is uniformly aligned at a high angle with respect to the surface of the current collector.

**[Summary]**

[Technical Problem]

The present disclosure is directed to providing a negative electrode manufacturing technology in which a carbon-based negative electrode active material such as graphite contained in a negative electrode active layer has a high orientation, and in which such orientation is uniformly realized.

[Technical Solution]

To solve the problems described above, the present disclosure provides, in one aspect,

a negative electrode manufacturing device for a lithium secondary battery comprising: an oriented part for applying a magnetic field to an upper portion and a lower portion of an electrode sheet on which a negative electrode slurry comprising a carbon-based negative electrode active material is applied to a surface; and a drying part for drying the negative electrode slurry of the electrode sheet applied the magnetic field by the oriented part;
wherein the drying part includes a first drying part and a second drying part, and the first drying part pre-dries an edge end of the negative electrode slurry when the magnetic field is applied to the electrode sheet by the oriented part, and the second drying part dries the overall surface of the negative electrode slurry after the magnetic field application by the oriented part is completed.

Here, the oriented part may include a first magnet part disposed on an upper portion of the electrode sheet and a second magnet part disposed on a lower portion of the electrode sheet.

The first magnet part and the second magnet part may include a plurality of unit magnets disposed along the transfer direction (x-axis direction) and the width direction (y-axis direction) of the electrode sheet.

Further, the first magnet part and the second magnet part may have a length of 0.5 m to 10 m along the transfer direction of the electrode sheet; and the length in the width direction may have a ratio of 105% to 150% based on the length in the width direction of the negative electrode slurry, respectively.

In addition, the first drying part may be disposed singly at a width direction edge of the magnet part along the transfer direction of the electrode sheet, or may be disposed in a row mixed with the unit magnets at the width direction edge of the magnet part.

Further, the first magnet part and the second magnet part based on a point where the electrode sheet is introduced along the transfer direction of the electrode sheet may be divided into a first section in which a length ratio of the magnet part is from 0% to 10%; a second section in which a length ratio of the magnet part is from 10% to 90%; and a third section in which a length ratio of the magnet part is from 90% to 100%, and the first drying part may be disposed in the second section of any one of the first magnet part and the second magnet part.

Moreover, the first drying part may comprise at least one of an ultraviolet dryer, a near-infrared dryer, and a far-infrared dryer.

Further, the second drying part may be disposed adjacent to the terminal of the oriented part where the electrode sheet with the magnetic field applied is carried out.

Further, the second drying part may comprise one or more of a heat dryer, a vacuum oven, and a heater.

In addition, the present disclosure provides, in one aspect, a negative electrode for a lithium secondary battery manufactured by a manufacturing device according to the present disclosure, comprising: a negative electrode current collector, and a negative electrode active layer provided on at least one side of the negative electrode current collector and containing a carbon-based negative electrode active material.

In this case, the negative electrode active layer is divided in the width direction of the negative electrode active layer into a flat region located at the center and having a uniform thickness; and a sliding region located at an edge of the negative electrode active layer and having a thickness gradient, wherein the flat region and the sliding region may satisfy the following Formula 1:

$$[\text{Formula 1}]$$

$$0.9 \leq [\text{O.I}_{\text{sliding}}]/[\text{O.I}_{\text{center}}] \leq 1.3$$

wherein Formula 1,

$\text{O.I}_{\text{sliding}}$ represents the degree of alignment (O.I) in the sliding region,

O.I$_{center}$ represents the degree of alignment (O.I) in the flat region,
wherein the degree of alignment (O.I) represents the ratio ($I_{004}/I_{110}$) of the area ($I_{004}$) of the peak representing the (0,0,4) crystal surface and the area ($I_{110}$) of the peak representing the (1,1,0) crystal surface in the XRD measurement for the negative electrode active layer.

Here, the flat region of the negative electrode active layer may have a degree of alignment (O.I$_{center}$) of 0.1 to 1.5.

Further, the flat region of the negative electrode active layer may have a ratio of 95% or more of the overall length in the width direction of the negative electrode active layer, and the sliding region of the negative electrode active layer may have a ratio of 5% or less of the overall length in the width direction of the negative electrode active layer.

In addition, the carbon-based negative electrode active material included in the negative electrode active layer may include at least one of natural graphite and artificial graphite.

[Advantageous Effects]

The negative electrode manufacturing device for lithium secondary battery according to the present disclosure is capable of simultaneously performing crystal surface orientation and pre-drying of the carbon-based negative electrode active material at the edge end of the negative electrode slurry by providing a drying part using light energy at the width direction edge of the magnet part that aligns the crystal surface of the carbon-based negative electrode active material.

Accordingly, the negative electrode manufactured thereby realizes a high orientation of the crystal surface of the carbon-based negative electrode active material contained in the sliding region of the negative electrode active layer, and thus exhibits excellent overall orientation and orientation uniformity of the negative electrode active layer. In addition, the lithium secondary battery having the same has the advantage of excellent charge and discharge performance.

**[Brief Description of the Drawings]**

FIG. 1 is a structural drawing schematically illustrating the structure of a negative electrode manufacturing device according to the present disclosure.

FIG. 2 is a cross-sectional view in the width direction (y-axis direction) of the negative electrode manufacturing device showing the magnetic field M of the first magnet part; and the direction in which the heat energy E of the second drying part introduced at the edge side of the first magnet part acts on the negative electrode slurry.

FIG. 3 and FIG. 4 are perspective views showing the position and form of the first drying part, respectively.

**[Detailed Description]**

The present disclosure may have various modifications and various aspects, and thus specific aspects thereof will be described in detail below.

It should be understood that the present disclosure is not limited to the specific aspects, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

In addition, in the present disclosure, "including as a major component" can mean including at least 50 wt% (or at least 50 vol.%), at least 60 wt% (or at least 60 vol.%), at least 70 wt% (or at least 70 vol.%), at least 80 wt% (or at least 80 vol.%), at least 90 wt% (or at least 90 vol.%), or at least 95 wt% (or at least 95 vol.%) of a defined component relative to the total weight (or total volume) of the negative electrode active material. For example, "comprising graphite as a primary component of a negative electrode active material" may mean including at least 50 wt%, at least 60 wt%, at least 70 wt%, at least 80 wt%, at least 90 wt%, or at least 95 wt% of graphite, based on the total weight of the negative electrode active material, and in some cases may mean that the entire negative electrode active material is graphite, comprising 100 wt% of graphite.

In addition, as used herein, "electrode sheet" may refer to an object having a negative electrode slurry applied to the negative electrode current collector, or to an object having a negative electrode slurry applied to the negative electrode current collector that has dried to form a negative active layer.

Further, as used herein, "carbon-based negative electrode active material is oriented" or "carbon-based negative electrode active material is aligned" means that the crystal surfaces of the carbon-based negative electrode active material comprising the negative electrode active material particles are distributed in a predetermined orientation with respect to the surface of the negative electrode current collector. In this case, the crystal surface is a crystal surface representing the planar structure of the carbon-based negative electrode active material, which may mean a (1,0,0) crystal surface or a (1,1,0) crystal surface. Further, "orienting the carbon-based negative electrode active material" may be different from the carbon-based negative electrode active material particles themselves being arranged to have a specific orientation within the negative electrode active layer.

Further, "high orientation (or degree of orientation) of the carbon-based negative electrode active material" may mean that the carbon-based negative electrode active material contained in the negative electrode active layer is aligned at a high frequency relative to the surface of the negative electrode current collector, and in some cases, the carbon-based negative electrode active material contained in the negative electrode active layer is aligned at a high angle (e.g., greater than 45°; more specifically, 60° or more) relative to the surface of the negative electrode current collector.

Further, "high degree of alignment of the carbon-based negative electrode active material" may mean that the "O.I" referred to herein has a large value, such that the carbon-based negative electrode active material contained in the negative electrode active layer is aligned at a low angle (e.g., less than 45°) relative to the surface of the negative electrode current collector. Conversely, "low degree of alignment of the carbon-based negative electrode active material" may mean that the "O.I" has a small value, indicating that the carbon-based negative electrode active material contained in the negative electrode active layer is aligned at a high angle (e.g., greater than 45°; more specifically, greater than 60° or more) based on the surface of the negative electrode current collector.

Further, as used herein, the term "crystal surface of the carbon-based negative electrode active material" may refer to a surface on which the atoms of the carbon-based negative electrode active material form the shape of a crystal, which in the present disclosure may mean a crystal surface comprising a plane of the carbon-based negative electrode active material, or a crystal surface comprising the a-axis/a-b-axis of the carbon-based negative electrode active material crystal.

Hereinafter, the present disclosure will be described in more detail.

**Negative electrode manufacturing device for lithium secondary battery**

The present disclosure, in one aspect, provides a negative electrode manufacturing device for lithium secondary battery, including

an oriented part for applying a magnetic field to an upper portion and a lower portion of an electrode sheet on which a negative electrode slurry including a carbon-based negative electrode active material is applied to a surface; and
a drying part for drying the negative electrode slurry of the electrode sheet to which the magnetic field is applied by the oriented part,
wherein the drying part includes a first drying part and a second drying part,
wherein the first drying part pre-dries the edge end of the negative electrode slurry when a magnetic field is applied to the electrode sheet by the oriented part,
the second drying part dries the overall surface of the negative electrode slurry after the magnetic field application by the oriented part is completed.

The negative electrode manufacturing device according to the present disclosure is a device applied to manufacturing a negative electrode used in a lithium secondary battery, which, by applying a magnetic field to a negative electrode slurry included in a surface of a negative electrode current collector, specifically a carbon-based negative electrode active material, and applied on the negative electrode current collector, can align the crystal surface of the carbon-based negative electrode active material contained in the negative electrode slurry at a large angle close to vertical with respect to the negative electrode current collector. In this case, the negative electrode manufacturing device not only aligns the carbon-based negative electrode active material contained in the negative electrode slurry to a high degree of orientation, but also has the advantage of facilitating the orientation of the carbon-based negative electrode active material even at the edge end of the negative electrode slurry (in other words, the sliding region of the negative electrode active layer), where the alignment of the carbon-based negative electrode active material is difficult. Thus, the negative electrode manufacturing device can realize uniform alignment of the carbon-based negative electrode active material contained in the negative electrode slurry.

For this, the negative electrode manufacturing device includes an oriented part for aligning the crystal surface of the carbon-based negative electrode active material contained in the negative electrode slurry and a drying part for drying the negative electrode slurry.

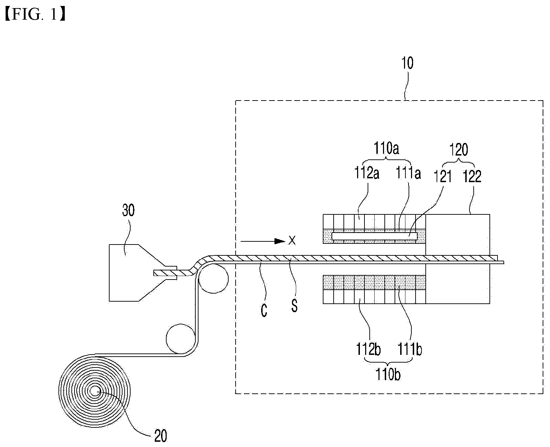

FIG. 1 is a structural drawing schematically illustrating the structure of a negative electrode manufacturing device according to the present disclosure. Referring to FIG. 1, the negative electrode manufacturing device 10 has a configuration including an oriented part 110: 110a and 110b for applying a magnetic field to an upper portion and a lower portion of the electrode sheet along a transfer direction (x-axis direction) of the electrode sheet; and a drying part 120 for drying a negative electrode slurry of the electrode sheet to which the magnetic field is applied by the oriented part.

The oriented parts 110: 110a and 110b are disposed on the upper portion and the lower portion of the electrode sheet transferred, respectively, to apply a magnetic field to the negative electrode slurry S exposed surface and the negative electrode current collector C exposed surface of the electrode sheet, respectively. In this case, the oriented parts 110: 110a and 110b include a first magnet part 110a and a second magnet part 110b disposed on the upper and lower portions of the electrode sheet, respectively, so that a magnetic field is uniformly applied to the side of the electrode sheet where the negative electrode slurry S is exposed (i.e., the upper surface) and the side of the electrode sheet where the negative electrode current collector C is exposed (i.e., the lower surface), respectively, when a magnetic field is applied to the negative electrode slurry S applied to the negative electrode current collector C and transferred.

In this case, the inclination of the crystal surface of the carbon-based negative electrode active material with respect to the negative electrode current collector C may be increased compared to the case where the magnet part is disposed only on the upper surface of the electrode sheet (inclination of the carbon-based negative electrode active material: about 40°-50°), and accordingly, the inclination of the crystal surface of the carbon-based negative electrode active material with respect to the surface of the negative electrode current collector C may have an angle close to vertical.

Further, the first magnet part 110a and the second magnet part 110b may include unit magnets 111a and 111b, respectively, and supporting parts 112a and 112b for fixing the unit magnets.

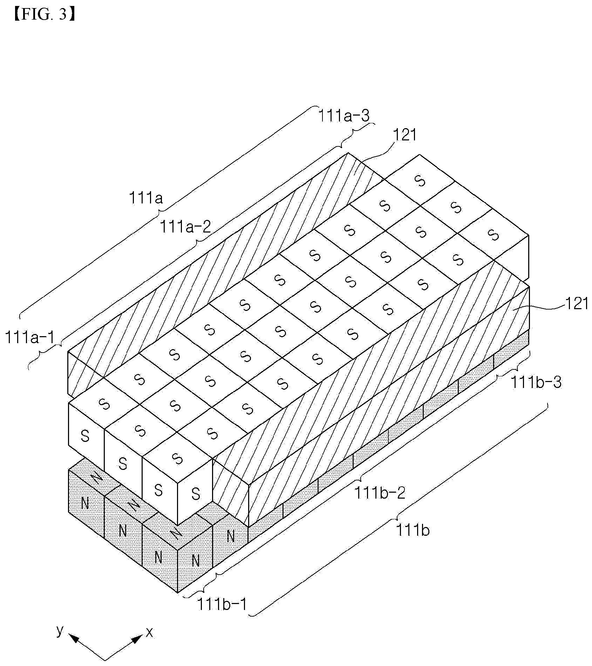

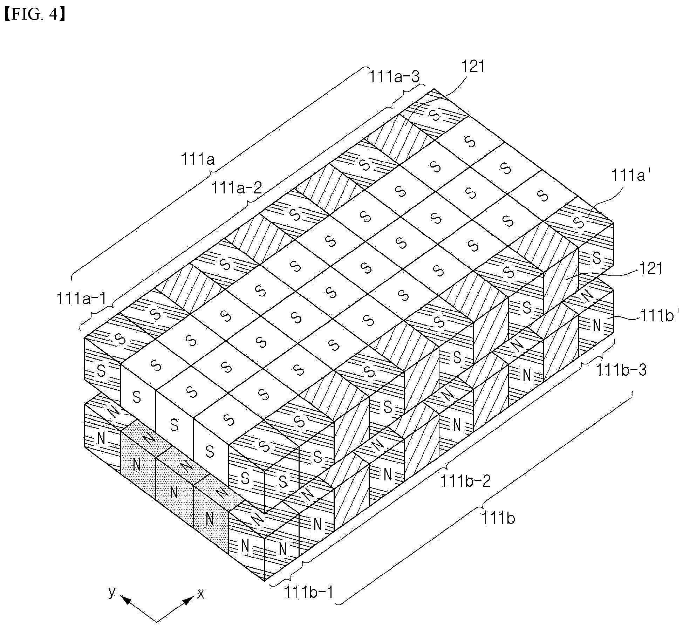

The unit magnets of the first magnet part 110a and the second magnet part 110b may each include one large area unit magnet; or, as shown in FIG. 3 and FIG. 4, when the direction in which the electrode sheet on which the negative electrode slurry S is applied is defined as the x-axis direction and the width direction of the electrode sheet transferred is defined as the y-axis direction, the first magnet part 110a and the second magnet part 110b may include a plurality of small area unit magnets in the x-axis direction and the y-axis direction, respectively. In this case, the unit magnets may include m pieces (wherein m is an integer 2 or more) and n pieces (wherein n is an integer 2 or more) in the x-axis direction and the y-axis direction, respectively, to form a magnet array, thereby one magnet part may include m×n pieces of unit magnets.

Further, the unit magnets may include electromagnets and/or permanent magnets. The electromagnets may include both direct current electromagnets and alternating current electromagnets. Further, the permanent magnets may include both magnets having ferromagnetic properties and magnets having soft magnetic properties, including NdFeB-based magnets, SmCo-based magnets, Ferrite magnets, Alnico magnets, FeCrCo-based magnets, Bond magnets (Nd-Fe-B-based, Sm-Fe-N-based, Sm-Co-based, Ferrite-based), and the like.

Further, the unit magnets of the first magnet part 110a and the second magnet part 110b may be disposed such that the unit magnets have opposite poles. For example, the N poles having the unit magnets of the first magnet part 110a and the S poles having the unit magnets of the second magnet part 110b may be facing each other; or the unit magnets may be disposed so that the S poles having the unit magnets of the first magnet part 110a and the N poles having the unit magnets of the second magnet part 110b are facing each other. In this way, when the electrode sheet passes through the space between the unit magnets having opposite poles, an attractive force is acted between the first magnet part 110a and the second magnet part 110b. Since the crystal surfaces of the carbon-based negative electrode active material included in the negative electrode slurry S are aligned along the direction in which the attractive force acts, the crystal surfaces of the carbon-based negative electrode active material are aligned at a higher angle with respect to the current collector C (or electrode sheet).

Further, the separation distance between the first magnet part 110a and the second magnet part 110b may be 10 mm to 50 mm, and more specifically may be 10 mm to 40 mm; 20 mm to 50 mm; or 15 mm to 45 mm. The present disclosure can more efficiently perform crystal surface alignment of the carbon-based negative electrode active material contained in the negative electrode slurry S with less energy by adjusting the separation distance of the first magnet part 110a and the second magnet part 110b to the above range.

In addition, the first magnet part 110a and the second magnet part 110b may have a predetermined length along the transfer direction of the electrode sheet in order to sufficiently apply a magnetic field necessary for the crystal surface of the carbon-based negative electrode active material contained in the negative electrode slurry S to be aligned at a high angle with respect to the negative electrode current collector C. Specifically, the first magnet part 110a and the second magnet part 110b may have a length of 0.5 m to 10 m along the transfer direction of the electrode sheet, and more specifically, they may have a length of 0.5 m to 7.5 m; 0.5 m to 5 m; 0.5 m to 2.5 m; 1 m to 5 m; 3 m to 8 m; 6 m to 10 m; or 4 m to 9 m.

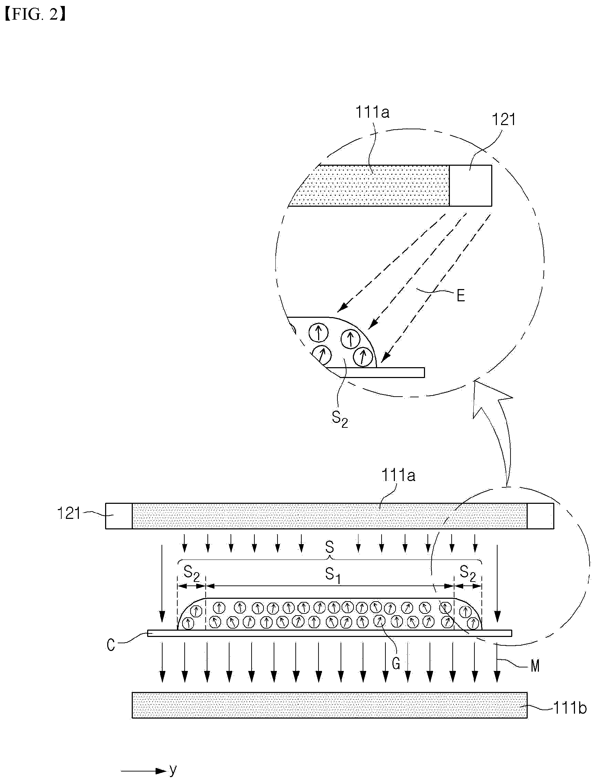

Moreover, the width direction (y-axis direction) size of the first magnet part 110a and the second magnet part 110b may be adjusted to be larger than the width direction (y-axis direction) size of the negative electrode slurry S. For example, the first magnet part 110a and the second magnet part 110b may have a length ratio in the width direction of 105% to 150% based on the length in the width direction of the negative electrode slurry S. More specifically, they may have a length ratio of 110% to 150%; 110% to 130%; 110% to 120%; 105% to 120%; 130% to 150%; 105% to 120%; or 105% to 110% based on the length in the width direction of the negative electrode slurry S. Referring to FIG. 2, a magnetic field is uniformly applied between the first magnet part 110a and the second magnet part 110b in a magnetic field direction perpendicular to the surface of the electrode sheet.

In this case, when the lengths of the first magnet part 110a and the second magnet part 110b have the same length ratio as the negative electrode slurry applied to the electrode sheet and/or the electrode sheet, it is difficult to sufficiently overcome the intermolecular energy deviation due to the surface tension of the solvent of the negative electrode slurry at the edge end of the negative electrode slurry, so that the crystal surface of the carbon-based negative electrode active material is difficult to be aligned at a high angle with respect to the negative electrode current collector. However, by satisfying the above-described range of the width direction lengths of the first magnet part 110a and the second magnet part 110b, the present disclosure enables a high degree of orientation of the carbon-based negative electrode active material G distributed at the edge end $S_2$ of the negative electrode slurry S having a curved surface form to be realized because a magnetic field M in the same direction as the center $S_1$ of the negative electrode slurry S can be strongly applied to the edge end $S_2$, as shown in FIG. 2.

Further, the drying part 120 performs the role of fixing the carbon-based negative electrode active material aligned by the oriented parts 110: 110a and 110b by drying the negative electrode slurry S.

In this case, the drying part 120 includes a first drying part 121 for pre-drying the edge end $S_2$ of the negative electrode slurry when a magnetic field is applied to the electrode sheet by the oriented parts 110: 110a and 110b; and a second drying part 122 for drying the overall surface of the negative electrode slurry S after the magnetic field application of the oriented parts 110: 110a and 110b is completed.

The first drying part 121 performs the function of selectively applying light energy to only the edge end $S_2$ of the negative electrode slurry for pre-drying when the oriented parts 110: 110a and 110b apply a magnetic field to the negative electrode slurry, thereby fixing the crystal surface of the carbon-based negative electrode active material contained in the negative electrode slurry simultaneously with or immediately after orientation.

For this, the first drying part 121 may be disposed on a side of one or more of the first magnet part 110a and the second magnet part 110b and may include means for irradiating light or applying a wavelength of light to the surface of the negative electrode slurry.

Generally, drying of the negative electrode slurry is performed by applying hot air at a high temperature, which may result in a long drying time of the negative electrode slurry, which may disrupt the alignment of the carbon-based negative electrode active material in the negative electrode slurry. Further, when the speed of the hot air is reduced and the heat is increased to solve such problems, the solvent in the negative electrode slurry tends to dry relatively quickly on the surface of the negative electrode slurry. Such phenomenon induces the solvent present in the inside of the negative electrode slurry to migrate to the surface to volatilize. Such migration of the solvent causes the binder inside the negative electrode slurry to be concentrated to the surface of the negative electrode slurry, which reduces the adhesion strength of the negative electrode active layer and the negative electrode current collector. However, the present disclosure can quickly fix a carbon-based negative electrode active material having an oriented crystal surface without loss of degree of orientation by selectively applying light energy rather than heat energy only to the edge end of the negative electrode slurry.

Accordingly, the first drying part 121 may include means for applying energy to the negative electrode slurry S in the form of light or wavelength. For example, the first drying part 121 may include an ultraviolet dryer, a near-infrared dryer, a far-infrared dryer, an ultrasonic dryer, etc.

As one example, the first drying part 121 may include a far-infrared dryer that emits energy with a wavelength of $1\,\mu m$ or more, more specifically $5\,\mu m$ or more, $10\,\mu m$ or more, or $20\,\mu m$ or more, in order to realize a uniform drying rate of the negative electrode slurry S. Unlike a near-infrared dryer or an infrared dryer conventionally applied in the art, the far-infrared dryer has the advantage of having good energy efficiency because of the long light or wavelength, and of being able to apply energy uniformly not only to the surface of the negative electrode slurry S but also to the inside, thereby increasing the adhesion between the negative electrode slurry S and the negative electrode current collector C in a short time.

In this case, the first drying part 121 can release energy at a power density of $50\,kW/m^2$ to $1,000\,kW/m^2$, and more specifically, it can release energy at a power density of $50\,kW/m^2$ to $500\,kW/m^2$; $50\,kW/m^2$ to $250\,kW/m^2$; or $50\,kW/m^2$ and $200\,kW/m^2$. The present disclosure can control the power density of the first drying part 121 to the above range, thereby preventing an excessive power density from inducing uneven drying of the negative electrode slurry.

In addition, the present disclosure can dispose the first drying part 121 and the second drying part 122 at a specific position to realize a uniform and high crystal surface orientation of the carbon-based negative electrode active material contained in the negative electrode active layer.

Specifically, the first drying part 121 may be located on a side of a width direction edge of a magnet part (e.g., the first magnet part) located in an upper portion of the negative electrode slurry in order to pre-dry the edge end $S_2$ of the

negative electrode slurry while a magnetic field is applied.

In one example, the first drying part 121 may be disposed singly on the width direction (y-axis direction) edge side of the magnet part located in the upper portion of the negative electrode slurry transferred, along the transfer direction of the electrode sheet as shown in FIG. 3. In this case, not only is it easy to add the first drying part 121 to the equipment conventionally used for manufacturing negative electrodes, but it is also easy to maintain and repair in use, and thus has the advantage of high economic efficiency.

As another example, the first drying part 121 may be disposed along the transfer direction of the electrode sheet, as shown in FIG. 4, on the side of the edge in the width direction (y-axis direction) of the magnet part located in the upper portion of the negative electrode slurry transferred, but may be disposed so that it is mixed with the magnet part comprising the unit magnets 111a' and 111b' to form a row.

In this case, the unit magnets 111a' and 111b' forming a row with the first drying part 121 on the side of the width direction (y-axis direction) edge of the magnet part may include magnets whose magnetic flux density (Br) is relatively less affected by temperature compared to the unit magnets disposed in the center of the width direction (y-axis direction) of the magnet part. The above "magnetic flux density (Br)" refers to a density of magnetic lines of force per unit area. Generally, as the temperature increases, the magnetic flux density Br decreases and eventually loses magnetic force, and the extent to which the magnetic flux density Br decreases is affected by the temperature coefficient of the magnetic flux density Br. Since the first drying part 121 of the present disclosure may induce heat during drying of the edge end of the negative electrode slurry, the unit magnets 111a' and 111b' forming a row with the first drying part 121 may be composed of unit magnets having a temperature coefficient of the magnetic flux density Br satisfying a predetermined range so that the magnetic flux density Br is less affected by the temperature. For example, the unit magnets 111a' and 111b' may be strontium and ferrite alloy magnets (temperature coefficient: about -0.18%); samarium and cobalt alloy magnets (temperature coefficient: about -0.03%); neodymium, iron and boron alloy magnets (temperature coefficient: about -0.12 to -0.09%); samarium, iron, and nitrogen alloy magnets (temperature coefficient: about -0.07%); aluminum, nickel, and cobalt alloy magnets (in other words, alnico magnets, temperature coefficient: about -0.02%), and the like as unit magnets. The present disclosure has the advantage that by adjusting the position of the first drying part 121 as described above, the orientation and fixation of the crystal surface of the carbon-based negative electrode active material contained in the edge end $S_2$ of the negative electrode slurry is performed in steps, so that the orientation performance of the carbon-based negative electrode active material is more excellent.

In addition, the first drying part 121 may be disposed on an edge side of the magnet part (e.g., the first magnet part) located in the upper portion of the negative electrode slurry transferred, but at a position separated by a predetermined separation distance from the inlet where the electrode sheet is brought into the magnet part and the outlet where the electrode sheet is carried out.

For example, as shown in FIG. 3 and FIG. 4, the first magnet part 110a and the second magnet part 110b may be divided into a first section 111a-1 and 111b-1, respectively, in which the length ratio of the magnet part is greater than 0% and less than or equal to 10%; a second section 111a-2 and 111b-2, respectively, in which the length ratio of the magnet part is greater than 10% and less than or equal to 90%; and a third section 111a-3 and 111b-3, respectively, in which the length ratio of the magnet part is greater than 90% and less than or equal to 100%, based on a point where the electrode sheet is introduced along the transfer direction of the electrode sheet. In this case, the first drying part 121 may be selectively disposed in the second sections of the first magnet part 111a and the second magnet part 111b according to the position of the negative electrode slurry. In other words, the first drying part 121 may be disposed in the second section 111a-2 of the first magnet part 111a when the negative electrode slurry is applied only to the upper surface of the electrode sheet; and may be disposed in the second sections 111a-2 and 111b-2 of the first magnet part 111a and the second magnet part 111b when the negative electrode slurry is applied to both sides of the electrode sheet.

When the first drying part 121 is disposed in the first sections 111a-1 and 111b-1 of the magnet parts, the negative electrode slurry may be pre-drying before the crystal surfaces of the carbon-based negative electrode active material contained in the edge end S2 of the negative electrode slurry are aligned, so that the degree of orientation of the crystal surfaces of the carbon-based negative electrode active material may be low. In addition, when the first drying part 121 is disposed in the third sections 111a-3 and 111b-3 of the magnet portion, the time for pre-drying by the first drying part is significantly short, making it difficult to fix the oriented carbon-based negative electrode active material, and thus, a loss of degree of orientation may occur due to volatilization of the solvent in the negative electrode slurry in the second drying part using heat energy.

Accordingly, the present disclosure can perform sufficient crystal surface orientation and fixation of the carbon-based negative electrode active material contained in the edge end $S_2$ of the negative electrode slurry by disposing the position of the first drying part 121 in the second section of the magnet portion.

Further, the second drying part 122 performs a function of completely drying the overall negative electrode slurry to form a negative electrode active layer.

In this case, the second drying part 122 may be disposed adjacent to the terminal of the oriented part 110 from which the electrode sheet is carried out, in other words, the terminal of each magnet part 110a and 110b, in order to prevent the crystal surface of the carbon-based negative electrode active material contained in the center of the negative electrode slurry from losing its degree of orientation after carried out from the oriented part 110. Here, "the terminal of the oriented part/magnet part and the second drying part are disposed adjacent" may mean that the outlet of the oriented part 110: 110a and 110b, from which the electrode sheet with a magnetic field applied to the negative electrode slurry is carried out, and the inlet of the second drying part 122, into which the electrode sheet is brought in, are disposed to contact or have a predetermined separation distance.

Kinetic energy is applied to the negative electrode slurry S in the direction in which the electrode sheet is transferred (x-axis direction), and the crystal surfaces of the oriented carbon-based negative electrode active material are carried out from the oriented parts 110: 110a and 110b, and when the magnetic field is removed, the aligned crystal surfaces are inclined toward the negative electrode current collector C and aligned at a low angle due to the kinetic energy due to the transfer of the electrode sheet. However, by disposing the terminals (in other words, outlets) of the oriented parts 110: 110a and 110b and the inlet of the second drying part 122 adjacent to each other, the present disclosure can cause the negative electrode slurry S to be drawn into the drying part 120 for drying immediately after leaving the terminals of the oriented parts, thereby minimizing the decrease in the orientation of the carbon-based negative electrode active material.

Here, the terminal end of the oriented part and the inlet of the second drying part 122 may be disposed to contact each other as shown in FIG. 1 so as to have a separation distance close to 0 mm, and in some cases, may be disposed to have a separation distance of 10 mm or less, 8 mm or less, 5 mm or less, 3 mm or less, 0.5 mm to 5 mm, 5 mm to 10 mm, or 1 mm to 3 mm.

The present disclosure, by adjusting the separation distance between the terminals of the first magnet part and the second magnet part 110a and 110b and the drying part as described above, can not only prevent the loss of the degree of alignment of the crystal surface of the carbon-based negative electrode active material contained in the negative electrode slurry due to an excessive separation distance, but also prevent the degradation of the magnet part due to high temperature as the magnet part 110a and 110b are drawn into the second drying part 122.

Meanwhile, the second drying part 122 may comprise a drying means for applying heat energy to completely dry the front surface of the negative electrode slurry uniformly. Such a second drying part 122 may include, without limitation, any of those conventionally applied in the art, but in particular, a heat dryer, a vacuum oven. a heater, etc., either singly or in combination.

Furthermore, the second drying part 122 may have a structure including a wall blocking the periphery except for the inlet and outlet for bringing in and carrying out the electrode sheet and drying means (not shown) for drying the electrode sheet with the electrode slurry S applied on the inner wall of the wall.

When the electrode sheet is brought in through the inlet of the second drying part 122, the electrode sheet receives heat energy from the drying means at the inner wall surface of the wall. Thus, the wall is preferably made of an insulation material to prevent loss of heat energy from being transferred to the outside.

The negative electrode manufacturing device according to the present disclosure has the advantage that, by having the above-described configuration, the crystal surface orientation of the carbon-based negative electrode active material contained at the edge end of the negative electrode slurry is excellent, and thus, a negative electrode having excellent overall orientation and excellent orientation uniformity of the negative electrode active layer can be manufactured.

### Negative electrode for lithium secondary battery

The present disclosure provides, in one aspect, a negative electrode for a lithium secondary battery manufactured by a manufacturing device according to the present disclosure, comprising: a negative electrode current collector, and a negative electrode active layer provided on at least one side of the negative electrode current collector and containing a carbon-based negative electrode active material.

A negative electrode for a lithium secondary battery according to the present disclosure includes a negative electrode active layer comprising a carbon-based negative electrode active material on at least one side of the negative electrode current collector. The negative electrode active layer is a layer embodying the electrical activity of the negative electrode and is prepared by applying a negative electrode slurry including a negative electrode active material embodying an electrochemical redox reaction during charging and discharging of the battery to at least one surface of the negative electrode current collector, and then drying and rolling the negative electrode slurry.

Here, the negative electrode is characterized in that the negative electrode includes a highly oriented and uniform negative electrode active layer of the carbon-based negative electrode active material by orienting and drying the crystal surface of the carbon-based negative electrode active material contained in the negative electrode slurry during manufacture using the negative electrode manufacturing device of the present disclosure described above.

Generally, the negative electrode slurry used for manufacturing the active layer of the negative electrode has a form in which the carbon-based negative electrode active material is mixed with a dispersant, wherein the dispersant is generally water. Water is a solvent having a large surface tension, and the negative electrode slurry included therein exhibits a phenomenon of reducing the surface area exposed to air after applied to the negative electrode current collector because of the large surface tension of water. Accordingly, the negative electrode slurry applied on the negative electrode current collector forms a curved surface having an edge end at a predetermined angle with the surface of the negative electrode current collector inwardly of the slurry. The curved surface causes the potential energy of the molecules near the liquid surface and the molecules inside the liquid to be different because of the large surface tension of the water, and this energy deviation acts as a factor that hinders the orientation of the graphite using a magnetic field. Therefore, in general, when a magnetic field is applied to the negative electrode slurry, the center portion of the negative electrode slurry having a flat surface is implemented with a high orientation of the graphite, but the edge end region of the negative electrode slurry having a curved surface is implemented with a low orientation of the graphite.

However, the negative electrode according to the present disclosure is manufactured by the negative electrode manufacturing device of the present disclosure described above, so that the crystal surface of the carbon-based negative electrode active material contained in the edge end region of the negative electrode slurry is aligned to have a high angle with respect to the surface of the negative electrode current collector, and thus the overall degree of orientation and uniformity of the negative electrode active layer is excellent.

Specifically, the negative active layer of the negative electrode is divided into a flat region $S_1$ centrally located in the width direction of the negative active layer and having a uniform thickness, and a sliding region $S_2$ located at the edge of the negative active layer and having a thickness gradient. In this case, the carbon-based negative electrode active material contained in the flat region $S_1$ and the sliding region $S_2$, respectively, has a high orientation of the crystal surface and the degree of orientation thereof is uniform, so as to satisfy the following Formula 1:

$$[\text{Formula 1}]$$

$$0.9 \leq [\text{O.I}_{\text{sliding}}]/[\text{O.I}_{\text{center}}] \leq 1.3$$

(wherein Formula 1,

O.I$_{\text{sliding}}$ represents the degree of alignment (O.I) in the sliding region,
O.I$_{\text{center}}$ represents the degree of alignment (O.I) in the flat region,
wherein the degree of alignment (O.I) represents the ratio ($I_{004}/I_{110}$) of the area ($I_{004}$) of the peak representing the (0,0,4) crystal surface and the area ($I_{110}$) of the peak representing the (1,1,0) crystal surface in the XRD measurement for the negative electrode active layer.)

The orientation of the crystal surface of the carbon-based negative electrode active material may be determined by crystal surface analysis of the carbon-based negative electrode active material, such as X-ray diffraction. The degree of alignment (O.I) of the carbon-based negative electrode active material shown in the Formula 1 may be an indicator of the direction in which the crystal structure of the carbon-based negative electrode active material is aligned, and more specifically, the degree to which the crystal surface representing a plane of the carbon-based negative electrode active material is aligned with respect to the surface of the negative electrode current collector upon X-ray diffraction (XRD) measurement. For example, when the negative electrode active layer comprises graphite as a carbon-based negative electrode active material, X-ray diffraction measurements of the electrode sheet show $2\theta=26.5\pm0.2°$, $42.4\pm0.2°$, $43.4\pm0.2°$, $44.6\pm0.2°$, $54.7\pm0.2°$, and $77.5\pm0.2°$, which represent the (0,0,2) surface, (1,0,0) surface, (1,0,1)R surface, (1,0,1)H surface, (0,0,4) surface, and (1,1,0) surface of the crystal surface of graphite contained in the negative electrode active layer. In general, in the case of graphite, graphene layers are placed on the a-axis and b-axis planes, and these graphene layers are stacked along the c-axis to have a hexagonal or rhombohedral crystal structure. Here, the crystal surface peak is a peak indicative of a face characteristic of such a crystal structure. In addition, the peak that appears at $2\theta=43.4\pm0.2°$ may be viewed as an overlap of a peak corresponding to the (1,0,1)R surface of a carbon-based negative electrode active material and the (1,1,1) surface of a negative electrode current collector, such as copper (Cu), and thus may be excluded in determining the degree of alignment.

The present disclosure can measure the degree of alignment (O.I) of a carbon-based negative electrode active material through the ratio of the area of the peak at $2\theta=54.7\pm0.2°$ representing the (0,0,4) surface and the peak at $2\theta=77.5\pm0.2°$ representing the (1,1,0) surface, specifically, the ratio of the areas obtained by integrating the intensities of the peaks. The (0,0,4) surface appearing at $2\theta=54.7\pm0.2°$ indicates the thickness direction characteristics (c-axis direction characteristics) of the layered structure in which the graphite layer planes are stacked, and the (1,1,0) surface appearing at $2\theta=77.5\pm0.2°$ indicates the planar characteristics (a/b-axis direction characteristics) of the stacked graphite layer. Accordingly, the smaller the peak of the (0,0,4) plane, which represents the thickness direction characteristics of the graphite layer plane, and the larger the peak of the (1,1,0) plane, which represents the planar characteristics of the graphite layer, indicates that the plane of the graphite is aligned at a high angle with respect to the surface of the negative electrode current collector. In other words, the above degree of alignment (O.I) may indicate that when the value is close to 0, the angle or tilt of the plane of the graphite layer with respect to the surface of the negative electrode current collector is close to 90°, and when the value is larger, the tilt with respect to the surface of the negative electrode current collector is close to 0° or 180°.

For example, the negative electrode according to the present disclosure may have a degree of alignment (O.I) of 0.1 to 1.5 because the crystal surface of the carbon-based negative electrode active material contained in the flat region $S_1$ of the negative electrode active layer is aligned at a high angle with respect to the negative electrode current collector. Specifically, the degree of alignment (O.I) may be 0.1 to 1.2; 0.1 to 1.0; 0.1 to 0.5; 0.15 to 0.6; 0.15 to 0.5; 0.2 to 0.5; 0.4 to 0.7; 0.3 to 0.5; 0.4 to 0.9; 0.5 to 0.9; 0.6 to 1.0; 0.7 to 1.0; 0.9 to 1.2; or 0.8 to 1.1. A degree of alignment (O.I) of the carbon-based negative electrode active material of 1.5 or less means that when the carbon-based negative electrode active material includes graphite, the crystal surface, meaning the graphite layer plane, is aligned such that it has a high angle/tilt with respect to the negative electrode current collector, such as an angle/tilt of 60° or more, 70° or more, 70° to 90°, 80° to 90°, 65° to 85°, or 70° to 85°.

In addition, the negative electrode according to the present disclosure not only has an overall low degree of alignment (O.I) of the carbon-based negative electrode active material contained in the negative electrode active layer, but also has an excellent uniformity of the degree of alignment (O.I), so that the above equation 1 can be satisfied with 0.9 to 1.3 (in other words, $0.9 \leq [\text{O.I}_{\text{sliding}}]/[\text{O.I}_{\text{center}}] \leq 1.3$). Specifically, the negative active layer of the negative electrode may satisfy the above Formula 1 as 0.9 to 1.2 (i.e., $0.9 \leq [\text{O.I}_{\text{sliding}}]/[\text{O.I}_{\text{center}}] \leq 1.2$); 0.9 to 1.1 (i.e., $0.9 \leq [\text{O.I}_{\text{sliding}}]/[\text{O.I}_{\text{center}}] \leq 1.1$); 1.0 to 1.3 (i.e., $1.0 \leq [\text{O.I}_{\text{sliding}}]/[\text{O.I}_{\text{center}}] \leq 1.3$); 1.0 to 1.2 (i.e., $1.0 \leq [\text{O.I}_{\text{sliding}}]/[\text{O.I}_{\text{center}}] \leq 1.2$); 1.1 to 1.2 (i.e., $1.1 \leq [\text{O.I}_{\text{sliding}}]/[\text{O.I}_{\text{center}}] \leq 1.2$); 1.2 to 1.3 (i.e., $1.2 \leq [\text{O.I}_{\text{sliding}}]/[\text{O.I}_{\text{center}}] \leq 1.3$); or 1.0 to 1.15 (i.e., $1.0 \leq [\text{O.I}_{\text{sliding}}]/[\text{O.I}_{\text{center}}] \leq 1.15$).

Formula 1 indicates a ratio of the degree of alignment (O.I) of the carbon-based negative electrode active material contained in the flat region $S_1$ and the sliding region $S_2$ of the negative electrode active layer, respectively, wherein the closer the ratio is to 1, the less the deviation is.

The negative electrodes manufactured using the conventionally used negative electrode manufacturing device have the aspect that the degree of alignment ($\text{O.I}_{\text{sliding}}$) of the carbon-based negative electrode active material contained in the sliding region of the negative electrode active layer is about 1.5 times higher than the degree of alignment ($\text{O.I}_{\text{center}}$) of the carbon-based active material contained in the flat region. As for the sliding region S2 of the negative electrode active layer, a negative electrode tab may be introduced at the time of manufacturing the negative electrode. However, if the degree of alignment ($\text{O.I}_{\text{sliging}}$) of the carbon-based negative electrode active material contained in the sliding region S2 is higher than the degree of alignment ($\text{O.I}_{\text{center}}$) of the carbon-based negative electrode active material contained in the flat region $S_1$, the sliding region $S_2$ may have a lithium mobility and an electron mobility that are relatively lower than the flat region $S_1$, which may cause an electrical resistance to the negative electrode tab to increase, resulting in a deterioration of the charge and discharge characteristics of the negative electrode.

However, the negative electrode according to the present disclosure can minimize the deviation of the degree of alignment of the carbon-based negative electrode active material contained in the flat region $S_1$ and the sliding region $S_2$, respectively, by adjusting the alignment ratio of the carbon-based negative electrode active material contained in the flat region $S_1$ and the sliding region $S_2$, respectively, to 0.7 to 1.3. Accordingly, the negative electrode can uniformly realize lithium mobility and electron mobility in the negative electrode active layer, thereby further improving the charge and discharge characteristics of the negative electrode.

Meanwhile, the flat region of negative electrode slurry $S_1$ is a region collected from the center of the negative electrode slurry during the manufacture of the negative electrode, having a flat shape on the exposed surface, and having a uniform average thickness of the negative electrode active layer, and may have a length ratio of more than 95% of the overall length in the width direction. The flat region is a region that constitutes a majority of the negative electrode active layer and may have a length ratio of 96% or more; 97% or more; 98% or more; 99% or more; 99.5% or more; 99% to 99.9%; or 99.5% to 99.99% of the overall length based on the width direction of the negative electrode active layer.

Here, "width direction of the negative electrode active layer" may mean a direction (y-axis direction) perpendicular to the travelling direction (x-axis direction) of the negative electrode current collector in the manufacture of the negative electrode and may be the same as the direction from one surface on which the negative electrode tabs are formed to the opposite surface thereof in the manufactured negative electrode. The present disclosure may further increase the power and energy density of the lithium secondary battery comprising the negative electrode by adjusting the length ratio of the flat region $S_1$ to the above range.

Further, the sliding region of negative electrode slurry $S_2$ is a region collected from the edge end of the negative electrode slurry in the manufacture of the negative electrode such that the exposed surface has a curved shape, and the average thickness of the negative electrode active layer has a gradient that decreases as it progresses outwardly in the width direction.

In this case, the sliding regions $S_2$ may be disposed sequentially and continuously on both sides of the flat region $S_1$, and in some cases, they may be disposed sequentially and continuously on only one side of the flat region $S_1$ because the blanking (or notching) of the electrode sheet is performed during the manufacturing of the negative electrode.

Furthermore, the sliding region $S_2$ may have a length ratio of 5% or less of the overall length in the width direction of the negative electrode active layer. Specifically, the sliding region $S_2$ may have a length ratio of 4% or less; 3% or less; 2% or less; 1% or less; 0.5% or less; 0.01% to 1%; or 0.01% to 0.5% of the overall length ratio in the width direction of the negative active layer, considering the energy density of the negative electrode. The length ratio is an overall length ratio arranged based on the width direction of the negative electrode active layer, and when the sliding regions $S_2$ are arranged on both sides of the flat region $S_1$, the length ratio of each sliding region may be halved to 1/2 of the above ratio.

Also, the sliding region $S_2$ may have a thickness gradient that decreases in thickness as it progresses outwardly, thereby the exposed surface of the curved shape may have a predetermined inclination angle with respect to the negative electrode current collector. For example, the sliding region $S_2$ may have an inclination angle of 70° or more for the exposed surface to the negative electrode current collector, more specifically, an inclination angle of 75° or more; 80° or more; 85° or more; 70° to 85°; 75° to 80°; 70° to 75°. The present disclosure can prevent the N/P ratio from being reversed at the end of the electrode assembly assembled with the positive electrode by adjusting the inclination angle of the exposed surface of the sliding region $S_2$ with respect to the negative electrode current collector to the above range and can further improve the adhesion with the separator at the end of the negative electrode.

Further, the average thickness of the negative electrode active layer may be from 100 $\mu$m to 300 $\mu$m, more specifically, from 100 $\mu$m to 250 $\mu$m; or from 130 $\mu$m to 190 $\mu$m, and the average thickness may be the same as the average thickness of the flat region. The present disclosure can uniformly align the crystal surfaces of the carbon-based negative electrode active material contained in each region by adjusting the average thickness of the negative electrode active layer to the above range, which can improve the high-rate charge and discharge performance and energy density of the battery including the negative electrode.

In addition, the negative electrode active layer may have a structure in which two separate layers are stacked, depending on the battery model or product usage to which the negative electrode of the present disclosure is applied, but is not limited thereto.

Specifically, the negative electrode according to the present disclosure may have a structure in which a first negative electrode active layer is arranged on the negative electrode current collector, and a second negative electrode active layer is arranged on the first negative electrode active layer. In this case, the first negative electrode active layer and the second negative electrode active layer each contain a carbon-based negative electrode active material, and the carbon-based negative electrode active material contained in each layer may be the same or different. The advantage of having a two-layer structure of the negative electrode active layer on the negative electrode current collector is that the composition of each negative electrode active layer can be easily controlled, thereby providing the advantage that an energy-efficient active material of the battery can be applied as the negative electrode active material to improve the electrical performance of the negative electrode, as well as to improve and/or prevent problems caused thereby (e.g., poor surface adhesion of the negative electrode current collector and the negative electrode active layer).

Moreover, the negative electrode active layer comprises a carbon-based negative electrode active material as the negative electrode active material to realize electrical activity through a reversible oxidation-reduction reaction during charging and discharging of the battery.

The carbon-based negative electrode active material refers to a material having carbon atoms as a main component, and such carbon-based negative electrode active material may include graphite. The graphite may include one or more of natural graphite and artificial graphite.

In one example, the carbon-based negative electrode active material may include a mixed graphite comprising a mixture of natural graphite and artificial graphite. In this case, the blended graphite may be a mixture of natural graphite and artificial graphite in a weight ratio of 10 to 50:50 to 90, or 10 to 30:70 to 90. By adjusting the content ratio of the natural graphite and the artificial graphite as described above, the mixed graphite may prevent the adhesion of the negative electrode current collector and the negative electrode active layer from being reduced due to the natural graphite of less than 10 parts by weight with respect to the overall weight, and may prevent the charge and discharge capacity of the negative electrode from being reduced due to the natural graphite of more than 50 parts by weight.

In addition, the carbon-based negative electrode active material is not particularly limited in form, but preferably has the form of a spherical graphite assembly formed by aggregation of a plurality of flake graphite. As the flake graphite, it may be natural graphite, artificial graphite, mesophase calcined carbon (bulk mesophase) based on tar and pitch, graphitized coke (raw coke, green coke, pitch coke, needle coke, petroleum coke, etc.), and the like. In particular, the carbon-based negative electrode active material is preferably assembled using a plurality of highly crystalline natural graphite. Also, one graphite assembly may be formed by assembling 2 to 100, preferably 3 to 20, pieces of graphite in the shape of a flake.

In addition, the carbon-based negative electrode active material may have an average particle diameter ($D_{50}$) of 0.5 $\mu$m to 20 $\mu$m, and more specifically, may have an average particle diameter ($D_{50}$) of 0.5 $\mu$m to 15 $\mu$m; 0.5 $\mu$m to 10 $\mu$m; 5 $\mu$m to 20 $\mu$m; 10 $\mu$m to 20 $\mu$m; 12 $\mu$m to 18 $\mu$m; 2 $\mu$m to 7 $\mu$m; 0.5 $\mu$m to 5 $\mu$m; or 1 $\mu$m to 3 $\mu$m.

The average particle diameter of the graphite may be advantageous to have a smaller particle diameter to maximize the disorder in the direction of swelling for each of the particles to prevent swelling of the particles by charging of the lithium ions. However, when the particle diameter of the graphite is less than 0.5 $\mu$m, a large amount of binder may be required due to an increase in the number of particles per unit volume. On the other hand, when the maximum particle diameter exceeds 20 $\mu$m, the expansion becomes severe, and the binding property between the particles and the binding property of the particles to the current collector may decrease as the charge and discharge are repeated, and the cycling characteristics may be greatly reduced.

Further, the negative electrode according to the present disclosure may include a predetermined silicon-based negative electrode active material along with the carbon-based negative electrode active material in the negative electrode active layer. The silicon-based negative electrode active material is a material comprising silicon (Si) as a main component, and may include silicon (Si) particles, silicon monoxide (SiO), silicon dioxide ($SiO_2$) particles, silicon carbide (SiC), or mixtures thereof. In some cases, the silicon (Si) containing particles may further comprise silicon carbide (SiC) particles along with silicon (Si) particles, silicon monoxide (SiO) and/or silicon dioxide ($SiO_2$) particles.

Further, the silicon-based negative electrode active material may be included in 0.5 to 30 parts by weight for 100 parts by weight of the overall negative electrode active material, and more specifically, it may be included in 1 to 9 parts by weight, 3 to 7 parts by weight, 11 to 19 parts by weight, 13 to 17 parts by weight, 10 to 30 parts by weight, 20 to 30 parts by weight, 15 to 25 parts by weight, 9 to 22 parts by weight. The present disclosure can improve the charge capacity per unit mass while reducing the lithium consumption and irreversible capacity loss during the initial charge and discharge of the battery by adjusting the content of the carbon-based negative electrode active material and the silicon-based negative electrode active material included in the negative electrode active material to the range as described above.

Meanwhile, the negative electrode active layer according to the present disclosure may optionally further comprise conductors, binders, other additives, and the like as needed along with the carbon-based negative electrode active material as the main component.

The conductor may include, but is not limited to, one or more of the following: carbon black such as acetylene black, ketjen black, etc.; carbon nanotubes; carbon fibers; and the like.

As one example, the negative electrode active layer may contain carbon black, carbon nanotubes, carbon fibers, and the like as a conductor alone or in combination.

In this case, the content of the conductor may be 0.1 to 10 parts by weight for the overall 100 parts by weight of the negative electrode active layer, and more specifically, it may be 0.1 to 8 parts by weight, 0.1 to 5 parts by weight, 0.1 to 3 parts by weight, 2 to 6 parts by weight, or 0.5 to 2 parts by weight. The present disclosure can prevent, by controlling the content of the conductor to a range as described above, a problem in which the resistance of the negative electrode increases due to a low content of the conductor, resulting in a decrease in the charging capacity, and a problem in which the content of the negative electrode active material decreases due to an excess of the conductor, resulting in a decrease in the charging capacity, or a problem in which the rapid charging characteristics decrease due to an increase in the loading amount of the negative electrode active layer.

Moreover, the binder may be appropriately applied to the extent that it does not degrade the electrical properties of the electrode as a component that assists in the coupling of the negative electrode active material to the conductor or the like and to the current collector, but more particularly to any one or more among polyvinylidene fluoride-hexafluoropropylene copolymer (PVDF-co-HFP), polyvinylidenefluoride (PVdF), polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluorinated rubber.

The content of the binder may be from 0.1 to 10 parts by weight, and more specifically from 0.1 to 8 parts by weight, 0.1 to 5 parts by weight, 0.1 to 3 parts by weight, or 2 to 6 parts by weight, based on the overall 100 parts by weight of the negative electrode active layer. The present disclosure can control the content of the binder contained in the negative electrode active layer to the above range, thereby preventing the adhesion of the active layer from deteriorating due to a low content of binder or the electrical properties of the electrode from deteriorating due to an excess of binder.

Further, the negative electrode current collector is not particularly limited as long as it has a high conductivity without causing chemical changes in the battery, and for example, copper, stainless steel, nickel, titanium, calcined carbon, and the like can be used, and in the case of copper or stainless steel, ones having a surface treated with carbon, nickel, titanium, silver, and the like can also be used. In addition, the average thickness of the negative electrode current collector above may be appropriately applied from 1 $\mu$m to 500 $\mu$m, taking into account the conductivity and overall thickness of the negative electrode being manufactured.

**Manufacturing method of negative electrode for lithium secondary battery**

Further, the present disclosure provides, in one aspect, a method of manufacturing a negative electrode for a lithium secondary battery.

Specifically, the method of manufacturing the negative electrode includes the steps of applying a negative electrode slurry comprising a carbon-based negative electrode active material on a negative electrode current collector;

applying a magnetic field to the applied negative electrode slurry using a negative electrode manufacturing device of the present disclosure; and drying the applied negative electrode slurry to form a negative electrode active layer.

A method of manufacturing a negative electrode according to the present disclosure may include applying a negative electrode slurry including a carbon-based negative electrode active material on a negative electrode current collector, and applying a magnetic field to the surface of the applied negative electrode slurry to align the carbon-based negative electrode active material in the negative electrode slurry at a high angle with respect to the surface of the negative electrode current collector. The negative electrode slurry containing the continuously aligned carbon-based negative electrode active material may then be dried to form a negative electrode active layer, thereby manufacturing a negative electrode.

The step of applying the negative electrode slurry is a step of coating the surface of the moving negative electrode current collector by discharging a negative electrode slurry containing a carbon-based negative electrode active material, may be applied in any manner conventionally applied in the art without particularly limited, but preferably may use a die coating method. The die coating method may be carried out by means of a slot die having a shim for controlling the discharge condition of the negative electrode slurry. In this case, by controlling the shape or the like of the shim, the loading amount, the application thickness, or the like of the negative electrode slurry applied on the negative electrode current collector can be easily controlled.

Further, the step of forming the negative electrode active layer may be performed by applying a magnetic field to the negative electrode slurry applied using the negative electrode manufacturing device according to the present disclosure and drying it.

The magnetic field application may be performed by an oriented part of the manufacturing device disposed at an upper portion and a lower portion of the negative electrode current collector to which the negative electrode slurry is applied. Here, the degree of alignment (O.I) of the carbon-based negative electrode active material contained in the negative electrode slurry may be adjusted by the intensity of the magnetic field applied, the time of exposure to the magnetic field, or the like. Thus, the above magnetic field application may be performed under a predetermined magnetic field intensity and time condition.

In one example, the magnetic field may be applied with an intensity of 2,000G (Gauss) to 9,000G (Gauss), more specifically 2,000G to 8,000G; 2,000G to 7,000G; 2,000G to 6,000G; 4,000G to 9,000G; 4,000G to 7,000G; 6,000G to 9,000G; 2,500G to 5,500G; 3,000G to 5,500G; 3,500G to 5,500G; 4,000G to 5,500G; 3,500G to 4,500G; or 4,500G to 5,000G.

As another example, the magnetic field may be applied for 5 seconds to 60 seconds, more specifically, it may be applied for 10 seconds to 60 seconds; 10 seconds to 30 seconds; 30 seconds to 60 seconds; 40 seconds to 50 seconds; 15 seconds to 35 seconds; or 10 seconds to 50 seconds.

For example, the magnetic field may be applied to the negative electrode slurry at an intensity of $4,700 \pm 100$ G for 12 seconds to 33 seconds.

In addition, the drying of the negative electrode slurry may vary in timing and manner depending on where the negative electrode slurry is applied. Specifically, the edge end of the negative electrode slurry may be pre-dried simultaneously or continuously with the application of the magnetic field by light energy, and the front surface of the negative electrode slurry may then be completely dried immediately after the application of the magnetic field by heat energy. A more detailed description thereof is omitted because it is the same as the base material previously described for the negative electrode manufacturing device.

Moreover, the manufacturing method of the negative electrode according to the present disclosure may further include the step of rolling the dried negative electrode slurry. The step of rolling is a step of increasing the density of the negative electrode active layer by applying pressure to the dried negative electrode slurry using a roll press or the like. In this case, the rolling may be performed at a temperature condition higher than room temperature.

Specifically, the rolling may be performed at a temperature of 40°C to 100°C, more specifically, 60°C to 100°C; 75°C to 100°C; 85°C to 100°C; 50°C to 90°C; 60°C to 80°C; 65°C to 90°C; 40°C to 70°C; or 40°C to 60°C.

Also, the rolling may be performed at a rolling speed of 2 m/s to 7 m/s, or more specifically, at a rolling speed of 2 m/s to 6.5 m/s; 2 m/s to 6 m/s; 2 m/s to 5.5 m/s; 2 m/s to 5 m/s; 2 m/s to 4.5 m/s; 2 m/s to 4 m/s; 2.5 m/s to 4 m/s; 2.5 m/s to 3.5 m/s; 3.5 m/s to 5 m/s; 5 m/s to 7 m/s; 5.5 m/s to 6.5 m/s; or 6 m/s to 7 m/s.

Further, the rolling may be performed under a pressure condition of 50 MPa to 200 MPa, and more particularly, the rolling may be performed under a pressure condition of 50 MPa to 150 MPa; 50 MPa to 100 MPa; 100 MPa to 200 MPa; 150 MPa to 200 MPa; or 80 MPa to 140 MPa.

The present disclosure can increase the energy density of the negative electrode while minimizing the change in the degree of alignment of the carbon-based negative electrode active material contained in the negative electrode active layer formed by rolling the dried negative electrode slurry under the above temperature, speed, and/or pressure conditions.

Hereinafter, the present disclosure will be described in more detail by way of examples and experimental examples.

However, the following examples and experimental examples are only illustrative of the present disclosure, and the contents of the present disclosure are not limited to the following examples and experimental examples.

**Examples 1 to 6 and Comparative examples 1 to 2. Manufacturing of negative electrode for lithium secondary battery**

First, natural graphite and artificial graphite were prepared as carbon-based negative electrode active materials, respectively, and a negative electrode slurry was prepared using the prepared carbon-based negative electrode active materials.

Specifically, a negative electrode active material was prepared by mixing natural graphite and artificial graphite in a 2:8 weight ratio, and carbon black as a conductor and carboxymethylcellulose (CMC) and styrene butadiene rubber (SBR) as binders. Then, a negative electrode slurry was prepared by mixing 95 parts by weight of mixed graphite, 1 part by weight of carbon black, 1.5 parts by weight of carboxymethylcellulose (CMC) and 2.5 parts by weight of styrene butadiene rubber (SBR) with water so that the solids were 50%.

Once the negative electrode slurry was prepared, the negative electrode slurry (average thickness: 180~200 $\mu$m, length in the width direction: about 550 mm) was cast using a die coater on a copper thin plate (thickness: 10 $\mu$m, length in the width direction: 500 mm) under roll-to-roll transfer (transfer speed: 5 m/min). A magnetic field of 6,000±100 G was applied to the negative electrode slurry cast on the copper thin plate using a negative electrode manufacturing device for 15 seconds to 30 seconds, and a negative electrode active layer was formed by drying. Here, referring to the formed negative electrode active layer, a region having a length ratio of 98.5% in the width direction of the negative electrode active layer in the center was set as a flat region, and regions disposed on both sides of said flat region with a total length ratio of 1.5% (each having a length ratio of 0.75%) were set as sliding regions. Thereafter, the negative electrode for lithium secondary battery was prepared by rolling the negative active layer at a pressure of 100MPa to 150 MPa and a transfer speed of 3 m/s at 50±1°C.

However, the negative electrode manufacturing device used for magnetic field application and drying of the negative electrode slurry had a first magnet part and a second magnet part disposed in the upper portion and the lower portion of the copper thin plate, respectively, wherein ① the length ratio of the first magnet part and the second magnet part in the width direction relative to the length of the negative electrode slurry was adjusted as shown in Table 1.

Further, the negative electrode manufacturing device is provided with a first drying part including a far-infrared dryer (power density: 150 kW/m2 and 180 kW/m2) on the width direction edge surface of the first magnet part, and a second drying part including a heat dryer on the outlet side of the oriented parts (in other words, the first and second magnet parts). In this case, the light irradiation area of the far-infrared dryer of the first drying part was adjusted to be an edge end of the negative electrode slurry. Further, the negative electrode manufacturing device adjusted ② the presence or absence of the first drying part; ③ the position of the first drying part in the first magnet part (first section/second section/third section); ④ the disposed form of the first drying part; and ⑤ the separation distance between the outlet of the oriented part and the inlet of the second drying part as shown in Table 1 below.

[Table 1]

| | ① Length ratio of the width direction of magnet part | First drying part | | | ⑤ Separation distance |
| --- | --- | --- | --- | --- | --- |
| | | ②With or without | ③Location | ④Disposed form | |
| Comparative example 1 | approximately 110%~120% | X | - | - | approximately 200~220 mm |
| Comparative example 2 | approximately 110%~120% | X | - | - | <approximately 10 mm |
| Example 1 | approximately 95%~100% | O | Section 2 | Disposed singly as in FIG. 3 | <approximately 10 mm |
| Example 2 | approximately 110%~120% | O | Section 2 | Disposed singly as in FIG. 3 | approximately 200~220 mm |
| Example 3 | approximately 110%~120% | O | Section 1 | Disposed singly as in FIG. 3 | <approximately 10 mm |
| Example 4 | approximately 110%~120% | O | Section 3 | Disposed singly as in FIG. 3 | <approximately 10 mm |

(continued)

| | ① Length ratio of the width direction of magnet part | First drying part | | | ⑤ Separation distance |
| --- | --- | --- | --- | --- | --- |
| | | ②With or without | ③Location | ④Disposed form | |
| Example 5 | approximately 110%~120% | O | Section 2 | Disposed singly as in FIG. 3 | <approximately 10 mm |
| Example 6 | approximately 110%~120% | O | Section 2 | Disposed alternatively as in FIG. 4 | <approximately 10 mm |

**Experimental example.**

The orientation and orientation uniformity of the carbon-based negative electrode active material contained in the negative electrode active layer of the negative electrode according to the present disclosure was evaluated.

Specifically, X-ray diffraction spectroscopy (XRD) was performed on the flat region and the sliding region of the negative electrode active layer for the negative electrodes prepared in Examples 1 to 6 and Comparative Examples 1 and 2, and the spectrum was measured. In this case, the measurement conditions of the above X-ray diffraction (XRD) were as follows:

- Target: Cu (K$\alpha$-ray) graphite monochromator
- Slit: Divergent slit = 1°, receiving slit = 0.1 mm, scattering slit = 1°,
- Measurement area: (1,1,0) surface: 76.5°< 2$\theta$ < 78.5°

$$(0,0,4) \text{ surface: } 53.5°< 2\theta < 56.0°.$$

From the spectrum measured under the above conditions, the degree of alignment of the carbon-based negative electrode active material in each region according to Formula 2 was calculated, and the ratio of the degree of alignment in the sliding region (O.I$_{sliding}$) to the degree of alignment in the flat region (O.I$_{center}$) was calculated. The results are shown in Table 2.

[Formula 2]

$$O.I = I_{004}/I_{110}$$

wherein I$_{004}$ represents the area of the peak representing the (0,0,4) crystal surface in the X-ray diffraction spectroscopy (XRD) measurement of the negative electrode active layer,
wherein I$_{119}$ represents the area of the peak representing the (1,1,0) crystal surface in an X-ray diffraction spectroscopy (XRD) measurement of the negative electrode active layer.

[Table 2]

| | O.I$_{center}$ | O..I$_{sliding}$/O.I$_{center}$ |
| --- | --- | --- |
| Comparative example 1 | 4.18 | 1.61 |
| Comparative example 2 | 2.62 | 1.55 |
| Example 1 | 2.31 | 1.30 |
| Example 2 | 1.17 | 1.28 |
| Example 3 | 0.83 | 1.23 |
| Example 4 | 0.71 | 1.22 |
| Example 5 | 0.51 | 1.17 |

(continued)

|  | $O.I_{center}$ | $O..I_{sliding}/O.I_{center}$ |
|---|---|---|
| Example 6 | 0.45 | 1.14 |

As shown in the Table 2, it can be observed that the negative electrode for lithium secondary battery according to the present disclosure has an excellent orientation of the carbon-based negative electrode active material contained in the negative electrode active layer and a high degree of orientation uniformity.

Specifically, it is shown that the negative electrodes of the comparative example without the first drying part have a degree of alignment ($O.I_{center}$) of the carbon-based negative electrode active material contained in the flat region of the negative electrode active layer that exceeds 2.5, and a ratio of the degree of alignment of the flat region and the sliding region that indicates the uniformity of the orientation of the carbon-based negative electrode active material is 1.5 or more.

On the other hand, the negative electrode of the examples provided with the first drying part has a degree of alignment ($O.I_{center}$) of the carbon-based negative electrode active material contained in the flat region of the negative electrode active layer of less than 2.4, and a ratio of the degree of alignment of the flat region and the sliding region indicative of the uniformity of the orientation of the carbon-based negative electrode active material is less than or equal to 1.3.

Moreover, in the negative electrode of the examples, it was found that when i) the length direction of the magnet part is longer than the length direction of the negative electrode slurry, ii) the first drying part is disposed in a form mixed with a unit magnet in the second section of the magnet part, and iii) the separation distance between the oriented part and the second drying part is narrower, the planar crystal surface of the carbon-based negative electrode active material contained in the negative electrode active layer is uniformly aligned at a high angle close to vertical with respect to the negative electrode current collector.

From these results, it can be seen that the negative electrode manufacturing device according to the present disclosure can realize a high orientation of the crystal surface of the carbon-based negative electrode active material contained in the sliding region of the negative electrode active layer, and thus, a negative electrode with excellent overall orientation and orientation uniformity of the negative electrode active layer can be manufactured. In addition, it can be found that the manufactured negative electrode has uniformly excellent lithium mobility and electron mobility of the negative electrode active layer, thereby having excellent charge and discharge performance.

As above, the present disclosure has been described in more detail through the drawings and aspects. However, since the configuration described in the drawings or aspects described herein is merely one aspect of the present disclosure and do not represent the overall technical spirit of the disclosure, it should be understood that the disclosure covers various equivalents, modifications, and substitutions at the time of filing of this application.

Thus, the technical scope of the present disclosure is not limited to what is described in the detailed description of the specification but should be determined by the claims of the patent.

[Description of Reference Numerals]

10: negative electrode manufacturing device
20: transfer part
30: coating part
110: oriented part
110a and 110b: first magnet part and second magnet part
111a and 111b: a plurality of unit magnets
112a and 112b: supporting part
120: drying part
121: first drying part
122: second drying part
S: negative electrode slurry
$S_1$: flat region of negative electrode slurry
$S_2$: sliding region of negative electrode slurry
G: carbon-based negative electrode active material
C: negative electrode current collector
M: magnetic field
E: light energy

111a-1 and 111b-1: first section and/or unit magnet included in the first section of first magnet part and second magnet part

111a-2 and 111b-2: second section and/or unit magnet included in the second section of first magnet part and second magnet part

111a-3 and 111b-3: third section and/or unit magnet included in the third section of first magnet part and second magnet part

111a' and 111b': unit magnets forming a row with the first drying part on the second section edge side of first magnet part and second magnet part

**Claims**

1. A negative electrode manufacturing device for a lithium secondary battery comprising:

   an oriented part configured for applying a magnetic field to an upper portion and a lower portion of an electrode sheet on which a negative electrode slurry including a carbon-based negative electrode active material is applied to a surface; and
   a drying part configured for drying the negative electrode slurry of the electrode sheet applied the magnetic field by the oriented part;
   wherein the drying part includes a first drying part and a second drying part, and
   the first drying part is configured to pre-dry an edge end of the negative electrode slurry when the magnetic field is applied to the electrode sheet by the oriented part, and
   the second drying part is configured to dry the overall surface of the negative electrode slurry after applying the magnetic field by the oriented part is completed.

2. The negative electrode manufacturing device for a lithium secondary battery of claim 1, wherein the oriented part comprises a first magnet part disposed on an upper portion of the electrode sheet and a second magnet part disposed on a lower portion of the electrode sheet;
   wherein the first magnet part and the second magnet part include a plurality of unit magnets disposed along a transfer direction and a width direction of the electrode sheet.

3. The negative electrode manufacturing device for a lithium secondary battery of claim 2, wherein the first magnet part and the second magnet part have a length of 0.5 m to 10 m along the transfer direction of the electrode sheet.

4. The negative electrode manufacturing device for a lithium secondary battery of claim 2, wherein a width of the first magnet part to a width of the second magnet part have a ratio of 105% to 150%..

5. The negative electrode manufacturing device for a lithium secondary battery of claim 2, wherein the first drying part is disposed singly at a width direction edge of the magnet part along the transfer direction of the electrode sheet or is disposed in a row, mixed with the unit magnets, at the width direction edge of the magnet part.

6. The negative electrode manufacturing device for a lithium secondary battery of claim 5, wherein the first magnet part and the second magnet part, based on a point where the electrode sheet is introduced along the transfer direction of the electrode sheet, are divided into:

   a first section in which a length ratio of the first magnet part or second magnet part is from 0% to 10%;
   a second section in which a length ratio of the first magnet part or second magnet part is from 10% to 90%; and
   a third section in which a length ratio of the first magnet part or second magnet part is from 90% to 100%,
   wherein the first drying part is disposed in the second section of any one of the first magnet part and the second magnet part.

7. The negative electrode manufacturing device for a lithium secondary battery of claim 1, wherein the first drying part comprises at least one of an ultraviolet dryer, a near-infrared dryer, or a far-infrared dryer.

8. The negative electrode manufacturing device for a lithium secondary battery of claim 1, wherein the second drying part is disposed adjacent to a terminal of the oriented part where the electrode sheet with the magnetic field applied is carried out.

9. The negative electrode manufacturing device for a lithium secondary battery of claim 1, wherein the second drying part comprises one or more of a heat dryer, a vacuum oven, or a heater.

10. A negative electrode for a lithium secondary battery manufactured by the negative electrode manufacturing device according to claim 1 comprising: a negative electrode current collector, and a negative electrode active layer provided on at least one side of the negative electrode current collector and containing a carbon-based negative electrode active material.

11. The negative electrode for a lithium secondary battery of claim 10, wherein the negative electrode active layer is divided in the width direction of the negative electrode active layer into a flat region located at the center and having a uniform thickness; and

at least one sliding region located at an edge of the negative electrode active layer and having a thickness gradient;
wherein the flat region and the at least one sliding region may satisfy the following Formula 1:

[Formula 1]

$$0.9 \leq [O.I_{sliding}]/[O.I_{center}] \leq 1.3$$

wherein Formula 1,

$O.I_{sliding}$ represents the degree of alignment (O.I) in the at least one sliding region,
$O.I_{center}$ represents the degree of alignment (O.I) in the flat region,
wherein the degree of alignment (O.I) represents the ratio ($I_{004}/I_{110}$) of an area ($I_{004}$) of a peak representing the (0,0,4) crystal surface and an area ($I_{110}$) of a peak representing the (1,1,0) crystal surface in XRD measurement of the negative electrode active layer.

12. The negative electrode for a lithium secondary battery of claim 11, wherein the flat region of the negative electrode active layer has a degree of alignment ($O.I_{center}$) of 0.1 to 1.5.

13. The negative electrode for a lithium secondary battery of claim 11, wherein

the flat region of the negative electrode active layer has 95% or more of a width of the negative electrode active layer, and
the at least one sliding region of the negative electrode active layer has 5% or less of the the width of the negative electrode active layer.

14. The negative electrode for a lithium secondary battery of claim 10, wherein the carbon-based negative electrode active material comprises at least one of natural graphite or artificial graphite.

【FIG. 1】

【FIG. 2】

【FIG. 3】

【FIG. 4】

# EP 4 535 443 A1

| INTERNATIONAL SEARCH REPORT | International application No. |
|---|---|
| | **PCT/KR2024/003085** |

## A. CLASSIFICATION OF SUBJECT MATTER

**H01M 4/04**(2006.01)i; **H01M 4/133**(2010.01)i; **F26B 3/30**(2006.01)i; **F26B 15/18**(2006.01)i; **F26B 25/06**(2006.01)i; **H01M 4/02**(2006.01)i

According to International Patent Classification (IPC) or to both national classification and IPC

## B. FIELDS SEARCHED

Minimum documentation searched (classification system followed by classification symbols)

H01M 4/04(2006.01); B05C 9/14(2006.01); C01B 32/20(2017.01); H01M 10/0525(2010.01); H01M 10/0587(2010.01); H01M 4/133(2010.01); H01M 4/1393(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극(anode), 건조(dry), 가장자리(edge), 자석(magnetic), 배향(orientation)

## C. DOCUMENTS CONSIDERED TO BE RELEVANT

| Category* | Citation of document, with indication, where appropriate, of the relevant passages | Relevant to claim No. |
|---|---|---|
| A | JP 5892393 B2 (TOYOTA MOTOR CO., LTD.) 23 March 2016 (2016-03-23)<br>See claims 6 and 8; paragraphs [0057]-[0059]; and figure 6. | 1-14 |
| A | KR 10-2021-0122992 A (LG ENERGY SOLUTION, LTD.) 13 October 2021 (2021-10-13)<br>See claims 1 and 7; and figures 1-6. | 1-14 |
| A | KR 10-2022-0064389 A (CONTEMPORARY AMPEREX TECHNOLOGY CO., LIMITED) 18 May 2022 (2022-05-18)<br>See entire document. | 1-14 |
| A | KR 10-1972235 B1 (DAEGU GYEONGBUK INSTITUTE OF SCIENCE AND TECHNOLOGY) 23 August 2019 (2019-08-23)<br>See entire document. | 1-14 |
| A | JP 2013-069432 A (TOYOTA MOTOR CORP.) 18 April 2013 (2013-04-18)<br>See entire document. | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 June 2024** | **24 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/003085**

| Patent document cited in search report | | | Publication date (day/month/year) | Patent family member(s) | | | Publication date (day/month/year) |
|---|---|---|---|---|---|---|---|
| JP | 5892393 | B2 | 23 March 2016 | CN | 103988344 | A | 13 August 2014 |
| | | | | CN | 103988344 | B | 09 November 2016 |
| | | | | DE | 112011105960 | T5 | 25 September 2014 |
| | | | | US | 2015-0030931 | A1 | 29 January 2015 |
| | | | | US | 9911972 | B2 | 06 March 2018 |
| | | | | WO | 2013-088540 | A1 | 20 June 2013 |
| | | | | WO | 2013-088540 | A1 | 27 April 2015 |
| KR | 10-2021-0122992 | A | 13 October 2021 | None | | | |
| KR | 10-2022-0064389 | A | 18 May 2022 | CN | 113228341 | A | 06 August 2021 |
| | | | | CN | 113228341 | B | 23 June 2023 |
| | | | | EP | 3859827 | A1 | 04 August 2021 |
| | | | | EP | 3859827 | A4 | 11 August 2021 |
| | | | | EP | 3859827 | B1 | 17 August 2022 |
| | | | | ES | 2926653 | T3 | 27 October 2022 |
| | | | | JP | 2022-540521 | A | 15 September 2022 |
| | | | | JP | 7222147 | B2 | 14 February 2023 |
| | | | | KR | 10-2529777 | B1 | 09 May 2023 |
| | | | | US | 2021-0336244 | A1 | 28 October 2021 |
| | | | | WO | 2021-109133 | A1 | 10 June 2021 |
| KR | 10-1972235 | B1 | 23 August 2019 | None | | | |
| JP | 2013-069432 | A | 18 April 2013 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230032299